# DEMANDE DE BREVET EUROPEEN

(11) **EP 1 243 464 A1**
(43) Date de publication de la demande: **25.09.2002**
(21) Numéro de dépôt: 02290648.1
(22) Date de dépôt: 14.03.2002
(51) Int. Cl.: B60P 1/64

(54) **Appareil de manutention d'une charge et véhicule le comportant**

(30) Priorité: 21.03.2001 FR 0103818
(71) Demandeur: Marrel, 42160 Andrézieux-Bouthéon (FR)
(72) Inventeur: Chabanas, Noel, 42500 Le Chambon Feugerolles (FR); Goiran, Thierry, 42160 Bonson (FR)
(74) Mandataire: Rinuy, Santarelli

(57) **Abrégé**

L'appareil est prévu pour permettre à un véhicule (1) de poser ou de prendre au sol une charge (5) telle qu'une benne ainsi que de vider cette charge qui est munie, sur une face avant, d'une anse de levage (6), ledit appareil comportant un bras de manutention (9) déformable et basculant admettant, outre une position de transport et une position de pose ou de prise au sol, une position de vidage à laquelle parvient un crochet (16) prévu pour s'engager avec l'anse de levage (6) d'une charge (5), en pivotant, sous l'effet d'un vérin de basculement (10), autour d'un axe transversal de pivotement (17) situé à l'arrière de l'appareil, cet axe étant situé à l'écart du tronçon longitudinal (14) du bras de manutention (9), vers le bas.

L'axe transversal de pivotement arrière (17) est derrière et sous les longerons du châssis (3) du véhicule (1), le bâti (8) de l'appareil ayant un profil en L dont une première branche coiffe les longerons du châssis alors que la partie supérieure de la seconde branche est contre l'arrière des longerons.

## Description

L'invention a trait aux appareils pour permettre à un véhicule de manipuler une charge telle qu'une benne munie sur sa face avant d'une anse de levage.

On connaît déjà, notamment par la demande de brevet FR 2 109 109 A un tel appareil qui comporte un bras de manutention déformable et basculant muni à une extrémité d'un crochet prévu pour s'engager avec l'anse de levage de la charge. En position de transport, le bras de manutention présente un tronçon frontal disposé à l'avant de l'appareil et orienté verticalement ou à peu près avec le crochet qui se trouve à son sommet et présente un tronçon longitudinal orienté horizontalement ou à peu près dont une première extrémité se raccorde à la base du tronçon frontal et dont la seconde extrémité est prévue pour être articulée à l'arrière du véhicule autour d'un axe transversal de pivotement, le tronçon longitudinal étant formé par une biellette dont une première extrémité est articulée autour de l'axe transversal de pivotement arrière et par une première branche d'une potence dont la seconde branche forme le tronçon frontal, la première branche de la potence ayant son extrémité opposée au tronçon frontal qui est articulée à la seconde extrémité de la biellette autour d'un axe transversal de pivotement intermédiaire, cette première branche de la potence étant télescopique et admettant une position déployée où sa longueur est maximale et une position rétractée où sa longueur est minimale, cette première branche étant déployée dans la position de transport susmentionnée, le bras de manutention admettant, en outre de cette position :
- une position de pose ou de prise au sol où le crochet est derrière le véhicule à une hauteur lui permettant de s'engager avec ou de se libérer de l'anse de levage d'une charge du type susmentionnée posée sur le sol, le passage entre la position de transport et la position de pose ou de prise au sol se faisant d'abord par passage de la première branche de la potence de sa position déployée à sa position rétractée puis, sous l'effet d'un vérin de basculement, par pivotement de la potence autour de son articulation avec la biellette, cette dernière restant fixe ; et
- une position de vidage à laquelle parvient ledit crochet à partir de la position de transport en pivotant vers le haut et vers l'arrière, sous l'effet du vérin de basculement, autour de l'axe transversal de pivotement arrière, le bras gardant au cours de ce pivotement la même configuration qu'en position de transport.

On connaît également diverses variantes dans l'agencement du tronçon longitudinal du bras et dans la façon dont il se déforme entre la position de transport et la position de pose ou de prise au sol, en particulier par la demande de brevet FR 2 185 520 A où la potence pivote par rapport à la biellette jusqu'à avoir atteint un angle prédéterminé à partir duquel est elle en butée contre la biellette, ces deux organes pivotant alors ensemble autour de l'axe transversal de pivotement arrière ; ou encore par la demande de brevet FR 2 169 810 A où le caractère télescopique de la première branche de la potence est remplacé par le caractère relevable d'un bout avant de cette première branche pour faire reculer le crochet ; certains appareils combinant une potence et une biellette fonctionnant comme dans le document FR 2 185 520 A mais avec une potence dont la première branche est télescopique et/ou à bout avant relevable, respectivement comme dans le document FR 2 109 109 A et dans le document FR 2 169 810 A.

L'invention vise à fournir un appareil de même nature mais plus commode et plus économique.

Elle propose à cet effet un appareil pour permettre à un véhicule de poser ou de prendre au sol une charge telle qu'une benne ainsi que de vider cette charge, ladite charge étant munie, sur une face avant, d'une anse de levage, ledit appareil comportant un bras de manutention déformable et basculant muni à une extrémité d'un crochet prévu pour s'engager avec l'anse de levage de ladite charge, ledit bras de manutention admettant :
- une position de transport où un tronçon frontal est disposé à l'avant dudit appareil et orienté verticalement ou à peu près avec ledit crochet qui se trouve à son sommet et où un tronçon longitudinal est disposé derrière le tronçon frontal et orienté horizontalement ou à peu près avec l'extrémité avant du tronçon longitudinal qui est raccordée à la base du tronçon frontal ;
- une position de pose ou de prise au sol où ledit crochet est derrière le véhicule à une hauteur lui permettant de s'engager avec ou de se libérer de ladite anse de levage d'une dite charge posée sur le sol ; et
- une position de vidage à laquelle parvient ledit crochet à partir de ladite position de transport en pivotant, sous l'effet d'un vérin de basculement, vers le haut et vers l'arrière autour d'un axe transversal de pivotement situé à l'arrière dudit appareil ;
caractérisé en ce que ledit axe transversal de pivotement arrière est situé à l'écart dudit tronçon longitudinal du bras de manutention, vers le bas.

Cet écart, qui n'existe pas dans les appareils conventionnels, où l'axe de pivotement est situé à l'extrémité arrière du tronçon longitudinal, offre l'avantage de permettre d'employer un vérin de basculement ayant à la fois une faible section et une faible inclinaison par rapport à l'horizontale en position de transport.

La hauteur de la portion de l'appareil selon l'invention qui est en-dessous de la charge peut ainsi être moins élevée que dans les appareils conventionnels. Un véhicule équipé d'un appareil selon l'invention bénéficie donc, lors du transport d'une charge, d'un meilleur comportement routier grâce à l'abaissement de son centre de gravité global et bénéficie également d'un abaissement de sa hauteur de passage sous obstacle.

En outre, la plus faible section du vérin de basculement permet, à débit égal de la centrale hydraulique, de bénéficier d'une plus grande vitesse de déplacement et donc de permettre un gain de temps pour réaliser les opérations de manutention d'une charge.

La raison pour laquelle l'écart proposé par l'invention entre le tronçon longitudinal du bras de manutention et l'axe transversal de pivotement arrière permet de minimiser à la fois la section et l'inclinaison du vérin de basculement, est qu'en position de transport, où le vérin de basculement, compte-tenu des contraintes d'encombrement, doit se trouver sensiblement au niveau du tronçon longitudinal du bras de manutention, cet écart permet à ce vérin, dans le cas où son inclinaison par rapport à l'horizontale, et plus précisément vers le haut et vers l'arrière, est particulièrement réduite, de disposer néanmoins d'un bon bras de levier vis-à-vis de l'axe transversal de pivotement arrière.

On notera que dans les appareils conventionnels, soit l'on choisissait d'incliner faiblement le vérin de basculement, mais l'on ne disposait alors que d'un bras de levier faible et il était nécessaire d'employer un vérin puissant et donc de gros diamètre nécessitant par conséquent une certaine hauteur pour l'appareil, soit l'on choisissait, pour prendre un vérin de plus faible section, d'incliner de façon relativement importante le vérin, mais cela nécessitait aussi une certaine hauteur pour l'appareil.

L'écart proposé par l'invention entre le tronçon longitudinal du bras de manutention et l'axe transversal de pivotement arrière offre également l'avantage de permettre de prévoir à l'arrière du véhicule une barre anti-encastrement qui saille vers l'arrière de façon relativement importante sans pour autant constituer un obstacle pour la charge lors du passage de la position de transport à la position de vidage.

En effet, lors de ce passage, chaque point du tronçon longitudinal du bras de manutention suit un trajet en arc de cercle centré sur l'axe transversal de pivotement arrière, qui est à l'écart de ce tronçon longitudinal, de sorte que ce dernier est non seulement animé d'un mouvement de basculement vers le haut et vers l'arrière, mais aussi d'un mouvement de décalage notamment vers l'arrière grâce auquel la barre anti-encastrement peut être disposée plus en arrière qu'avec un appareil conventionnel où la charge n'est pas animée d'un tel mouvement de décalage.

Selon des caractéristiques préférées, ledit bras de manutention comporte un tronçon postérieur qui, en position de transport, est disposé derrière ledit tronçon longitudinal et orienté verticalement ou à peu près avec le sommet du tronçon postérieur qui est raccordé à l'arrière du tronçon longitudinal, les moyens d'articulation dudit bras autour dudit axe transversal de pivotement arrière étant disposés à la base dudit tronçon postérieur.

La prévision d'un tel tronçon postérieur est particulièrement pratique pour la mise en oeuvre de l'invention.

Un tel tronçon postérieur peut par exemple aisément être disposé derrière le châssis du véhicule.

On observera que dans un tel cas, l'axe transversal de pivotement arrière est plus en arrière que le châssis du véhicule, et donc plus en arrière que ne serait l'axe correspondant d'un appareil conventionnel, ce qui améliore tant le bras de levier disponible pour le vérin de basculement que les possibilités de positionnement vers l'arrière d'une éventuelle barre anti-encastrement.

De préférence, ledit bras de manutention comporte à la jonction entre ledit tronçon longitudinal et ledit tronçon postérieur deux galets prévus pour soutenir respectivement un rail longitudinal situé à droite et un rail longitudinal situé à gauche sur une face inférieure de ladite charge.

Etant donné que ces galets de soutien font partie du bras de manutention, ils pivotent également autour de l'axe transversal de pivotement arrière lors du passage de la position de transport à la position de vidage.

Cela offre l'avantage, par rapport à la solution où les galets seraient fixes, qu'il n'est pas besoin d'un organe de support de l'arrière de la charge pour prendre le relais des galets lors du passage de la position de transport à la position de vidage.

Selon d'autres caractéristiques préférées, ledit appareil comporte un bâti ayant un profil en L dont une première branche est prévue pour venir sur le châssis dudit véhicule et dont la seconde branche saille de la première branche vers le bas et comporte des moyens d'articulation dudit bras de manutention autour dudit axe transversal de pivotement arrière.

Un tel bâti permet de mettre en oeuvre l'invention d'une façon particulièrement commode, et en particulier de permettre l'assujettissement de l'appareil par simple fixation du bâti sur le châssis du véhicule.

On notera en outre, et surtout, que les éventuels accessoires devant être disposés à l'arrière du véhicule, et en particulier une barre anti-encastrement ou une béquille d'appui au sol, peuvent être directement montés sur la seconde branche du bâti, c'est-à-dire directement sur l'appareil, ce qui permet, lors du montage de celui-ci sur un véhicule, de gagner du temps par rapport aux appareils conventionnels où l'opérateur de montage, après avoir fixé le bâti au châssis du véhicule, devait encore fixer ces accessoires sur le châssis.

L'invention vise également, sous un deuxième aspect, un véhicule équipé d'un appareil tel qu'exposé ci-dessus, dont l'axe transversal de pivotement arrière se trouve derrière et plus bas que les longerons du châssis dudit véhicule.

L'invention vise également un véhicule équipé d'un appareil tel qu'exposé ci-dessus avec un bâti ayant un profil en L, dont la première branche du bâti coiffe les longerons du châssis dudit véhicule et dont la partie supérieure de la seconde branche est contre l'arrière desdits longerons du châssis.

De préférence, pour des raisons de simplicité, de commodité et d'économie :
- il existe un biseau entre la face supérieure et la face arrière desdits longerons, ledit biseau étant bordé par une jonction entre les branches dudit bâti ; et/ou
- une équerre, disposée entre un longeron et un jambage dudit bâti, est fixée à la paroi latérale d'un longeron du châssis du véhicule.

L'exposé de l'invention sera maintenant poursuivi par la description d'exemples de réalisation, donnée ci-après à titre illustratif et non limitatif, en référence aux dessins annexés. Sur ceux-ci :
- la figure 1 est une vue en élévation prise depuis le côté gauche d'un véhicule équipé d'un appareil conforme à l'invention, en position de transport ;
- les figures 2 à 4 sont des vues similaires, mais avec l'appareil qui est respectivement en position de début ou de fin de basculement, en position de pose ou de prise au sol et en position de vidage ;
- la figure 5 est une vue en élévation de l'appareil selon l'invention prise depuis l'arrière du véhicule ;
- la figure 6 est une vue similaire à la figure 1, mais en agrandissement, de la seule portion arrière de l'appareil ;
- la figure 7 est une vue similaire à la figure 6 montrant une variante de réalisation où l'appareil est équipé d'une béquille arrière d'appui au sol ;
- la figure 8 est une vue similaire à la figure 6, montrant une autre variante de réalisation où l'appareil est équipé d'un crochet de remorquage ;
- la figure 9 est une vue similaire à la figure 8, mais avec l'appareil en position de vidage ; et
- la figure 10 est une vue similaire à la figure 6, montrant une autre variante de réalisation où la biellette du bras de manutention peut servir à relever l'arrière d'une charge.

Le véhicule 1 de type poids lourd ou camion montré sur les dessins comporte, derrière une cabine 2, un châssis porteur 3 sur lequel est monté un appareil 4 conforme à l'invention pour manipuler une charge telle que la benne 5, qui est munie de façon bien connue (voir normes AFNOR NF R 17-108 et DIN 30722) d'une anse de levage 6 sur sa face avant et de deux rails longitudinaux 7 situés respectivement à droite et à gauche sur sa face inférieure.

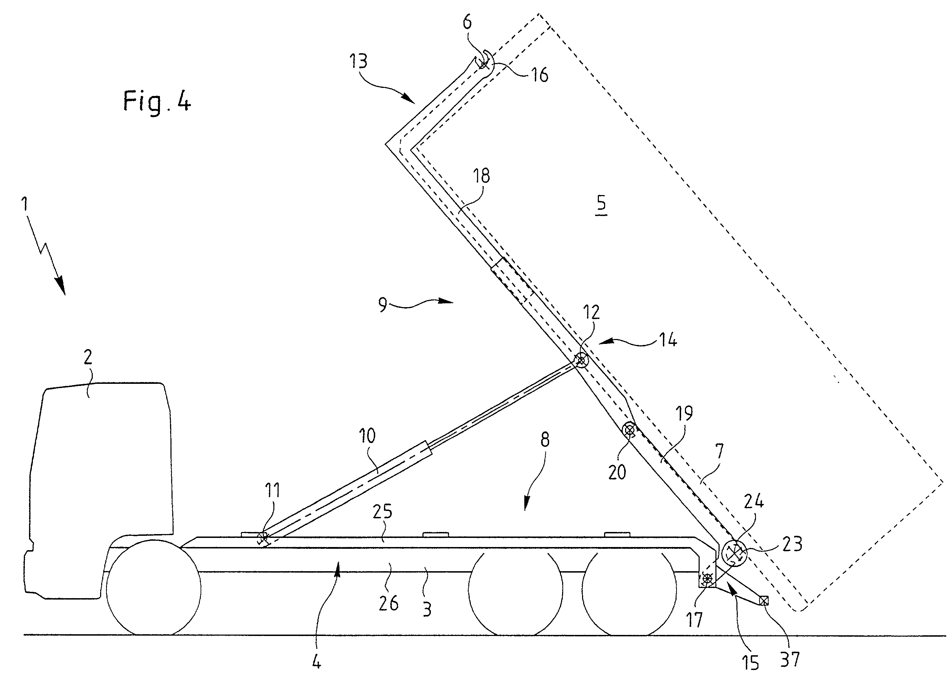

Comme on le voit mieux sur la figure 4, l'appareil 4 comporte un bâti 8 fixé sur le châssis 3, un bras de manutention 9 monté sur le bâti 8 et un vérin de basculement 10 dont l'extrémité avant est articulée sur le bâti 8 autour d'un axe transversal de pivotement 11 et dont l'extrémité arrière est articulée sur le bras 9 autour d'un axe transversal d'articulation 12.

Le bras de manutention 9 présente un tronçon frontal 13, un tronçon longitudinal 14 et un tronçon postérieur 15.

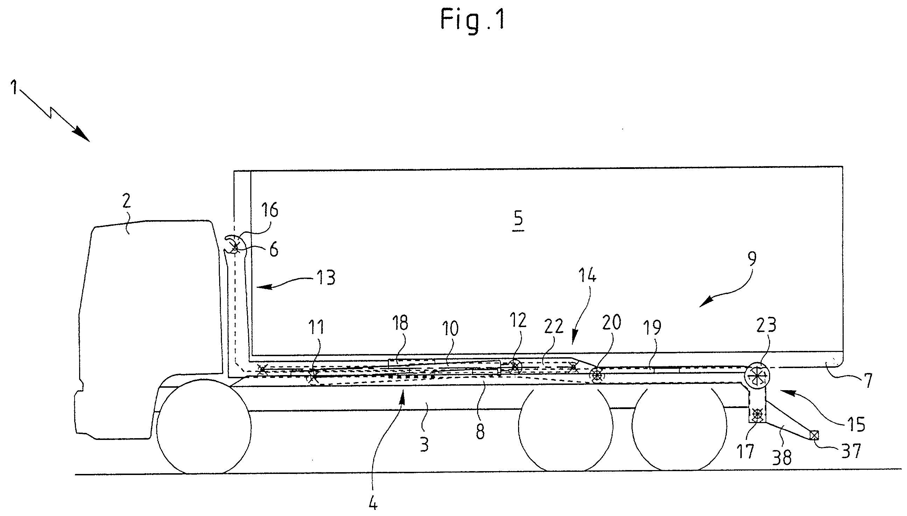

En position de transport (figure 1), le tronçon frontal 13 est disposé à l'avant de l'appareil et orienté verticalement ou à peu près avec, à son sommet, un crochet 16 prévu pour s'engager avec l'anse de levage 6 de la charge 5. Dans cette même position, le tronçon longitudinal 14 est disposé derrière le tronçon frontal 13 et orienté horizontalement ou à peu près avec son extrémité avant qui est raccordée à la base du tronçon 13. Toujours en position de transport, le tronçon postérieur 15 est disposé derrière le tronçon longitudinal 14 et orienté verticalement ou à peu près avec son sommet qui est raccordé à l'arrière du tronçon 14 et sa base qui est articulée autour d'un axe 17 de pivotement arrière vis-à-vis du bâti 8.

Ici, le bras 9 est formé par une potence 18 et par une biellette 19.

La potence 18 présente deux branches dont l'une forme le tronçon frontal 13 et dont l'autre appartient au tronçon longitudinal 14, cette seconde branche étant, à l'opposé du tronçon frontal 13, articulée à l'extrémité avant de la biellette 19 autour d'un axe transversal de pivotement 20. C'est sur cette seconde branche que l'axe d'articulation 12 entre le vérin 10 et le tronçon longitudinal 14 du bras 9 est prévu, non loin de l'axe 20.

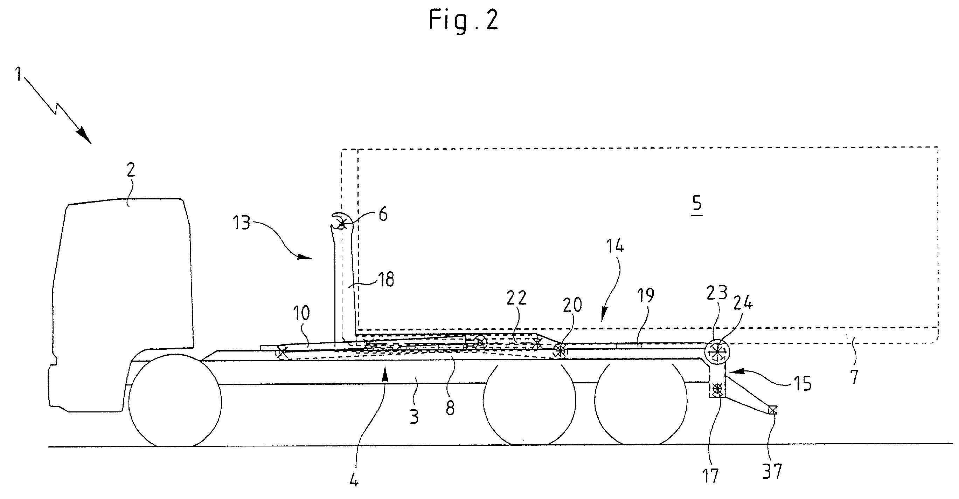

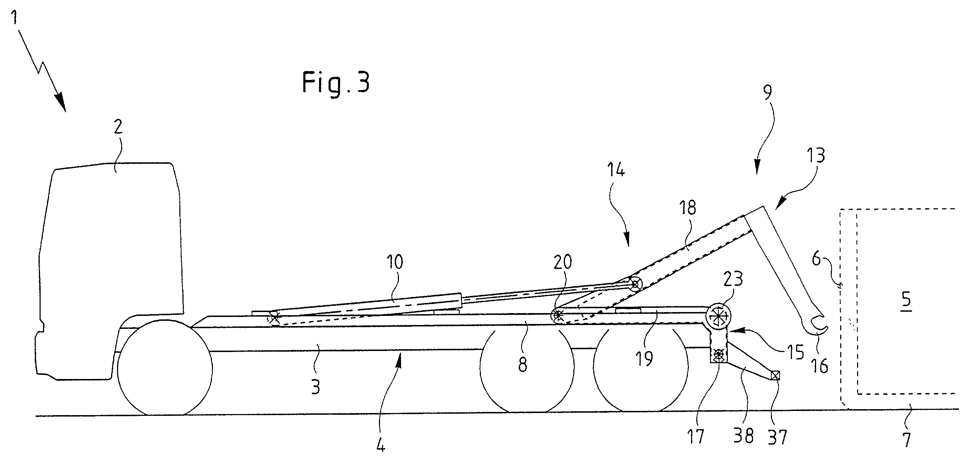

La seconde branche de la potence 18 est télescopique : elle admet une position déployée où sa longueur est maximale (voir figures 1 et 4) et une position rétractée où sa longueur est minimale (voir figures 2 et 3). Pour permettre à la seconde branche de la potence 18 de passer de la position déployée à la position rétractée et inversement, il est prévu un vérin de bras 22 partiellement illustré sur les figures 1 et 2.

La biellette 19 a un profil en cornière. Elle comporte une première branche articulée à son extrémité avant à la potence 18 autour de l'axe 20 tandis que la seconde branche, qui est articulée à sa base autour de l'axe 17, forme le tronçon postérieur 15 du bras 9.

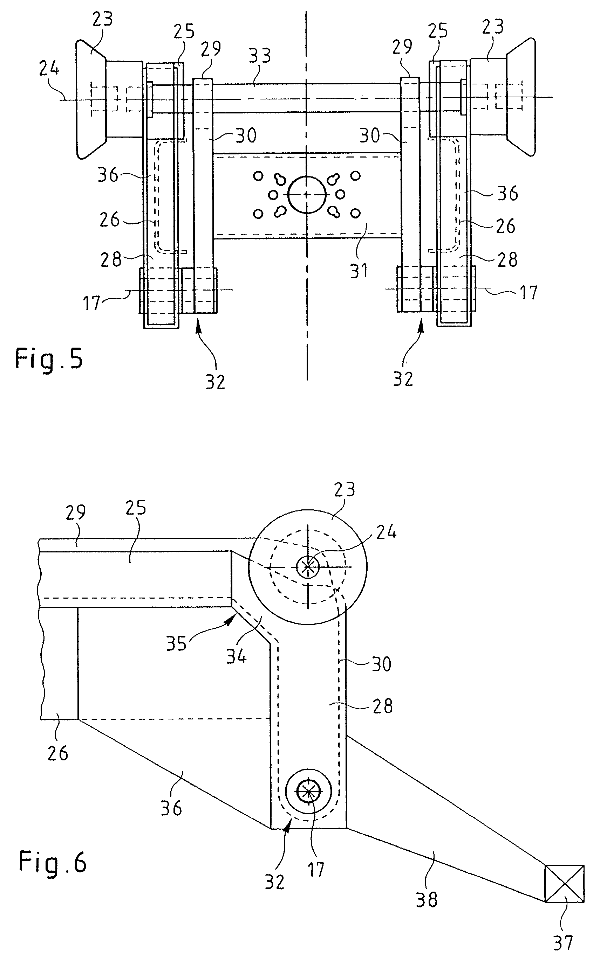

A la jonction entre les deux branches de la biellette 19, et donc à la jonction entre le tronçon longitudinal 14 et le tronçon postérieur 15 du bras 9, sont prévus deux galets 23 (voir figure 5) pour soutenir respectivement l'un et l'autre des rails 7 de la charge 5.

On va maintenant expliquer le fonctionnement de l'appareil 4.

Lorsque l'on souhaite poser au sol une charge 5 à partir de la position de transport illustrée sur la figure 1, l'on actionne le vérin 22 pour faire passer la seconde branche de la potence 18 de sa position déployée à sa position rétractée, ce qui a pour effet de faire reculer la charge 5 par rapport au véhicule 1.

Lorsque la seconde branche de la potence 18 est en position rétractée, on se trouve dans la position de début de basculement de la charge 5 illustrée sur la figure 2. Dans cette position, la biellette 19 est verrouillée sur le bâti 8 par des moyens bien connus non illustrés, tandis que la potence 18 est libre de pivoter vis-à-vis de la biellette 19 autour de l'axe 20.

La manoeuvre de pose au sol de la charge 5 se poursuit par l'actionnement du vérin de basculement 10 pour faire pivoter la potence 18 autour de l'axe 20, jusqu'à la position de pose au sol illustrée sur la figure 3.

Au cours du passage entre la position de début de basculement (figure 2) et la position de pose au sol (figure 3), la charge 5 s'est inclinée vers le haut et vers l'arrière en pivotant autour de l'axe d'articulation 24 des galets 23 jusqu'à ce que la charge 5 rencontre le sol au niveau de l'arête entre sa face inférieure et sa face arrière, la charge s'abaissant alors progressivement jusqu'à ce que sa face inférieure repose toute entière sur le sol, ce qui permet alors au crochet 16 de se dégager de l'anse 6.

Pour prendre au sol une charge 5, on effectue exactement les mêmes manoeuvres, mais dans l'ordre inverse : on actionne le vérin 10 pour engager le crochet 16 dans l'anse 6 puis pour soulever la charge 5 vers l'avant et vers le haut tout en la faisant avancer par rapport au véhicule 1 (de préférence avec le véhicule qui recule vers la charge, cette dernière restant fixe par rapport au sol) jusqu'à ce que les rails 7 viennent rencontrer les galets 23, ce à partir de quoi la charge 5 se redresse tout en continuant à avancer par rapport au véhicule jusqu'à la position de fin de basculement (figure 2), le vérin 22 étant alors actionné pour parvenir à la position de transport (figure 1).

Dans cette position, les moyens susmentionnés qui servent à assujettir la biellette 19 au bâti 8 sont libérés tandis qu'un verrouillage, effectué lui aussi par des moyens bien connus, est actif entre la potence 18 et la biellette 19 de sorte que ces deux organes ne peuvent pas pivoter l'un par rapport à l'autre autour de l'axe 20, mais forment un ensemble rigide.

Pour passer de la position de transport (figure 1) à la position de vidage (figure 4), l'on actionne le vérin 10, afin de faire pivoter le bras 9, et en particulier le crochet 16, et par conséquent la charge 5, autour de l'axe 17. La charge 5, du fait de l'inclinaison qui lui est donnée, peut alors se vider, après ouverture de sa ou de ses portes arrières, derrière le véhicule 1.

On va maintenant décrire plus en détail l'appareil 4.

Le bâti 8 de cet appareil a un profil en L dont une première branche est disposée sur le châssis porteur 3 du véhicule 1 et dont la seconde branche saille de la première branche vers le bas et présente, à sa base, des moyens pour articuler le bras 9 autour de l'axe 17.

La première branche du bâti 8 est formée par deux longerons 25, disposés respectivement au-dessus de l'un et l'autre des longerons 26 du châssis 3, des traverses (non illustrées) étant prévues entre les longerons 25 pour les réunir.

La seconde branche du bâti 8 est formée par deux jambages 28 qui se raccordent chacun transversalement à l'arrière respectivement de l'un et l'autre des longerons 25.

D'une façon générale, la biellette 19, qui a un profil en cornière, est disposée entre les longerons 25 et les jambages 28 du bâti 8.

La branche de la biellette qui appartient au tronçon longitudinal 14 du bras 9 comporte deux longerons 29 tandis que la seconde branche de cette biellette est formée par deux jambages 30 dont chacun se raccorde transversalement à l'arrière d'un respectif de l'un et l'autre des longerons 29, une traverse 31 (représentée sur la seule figure 5) étant disposée entre les jambages 30.

L'articulation entre le bâti 8 et la biellette 19 autour de l'axe 17 s'effectue grâce à des moyens d'articulation 32 entre les jambages 28 et 30, les moyens 32 étant disposés à la base de ces jambages.

A la jonction entre les longerons 29 et les jambages 30, la biellette 9 porte une barre transversale 33 qui s'étend vers l'extérieur au-delà du bâti 8, les galets 23 étant montés aux extrémités de la barre 33.

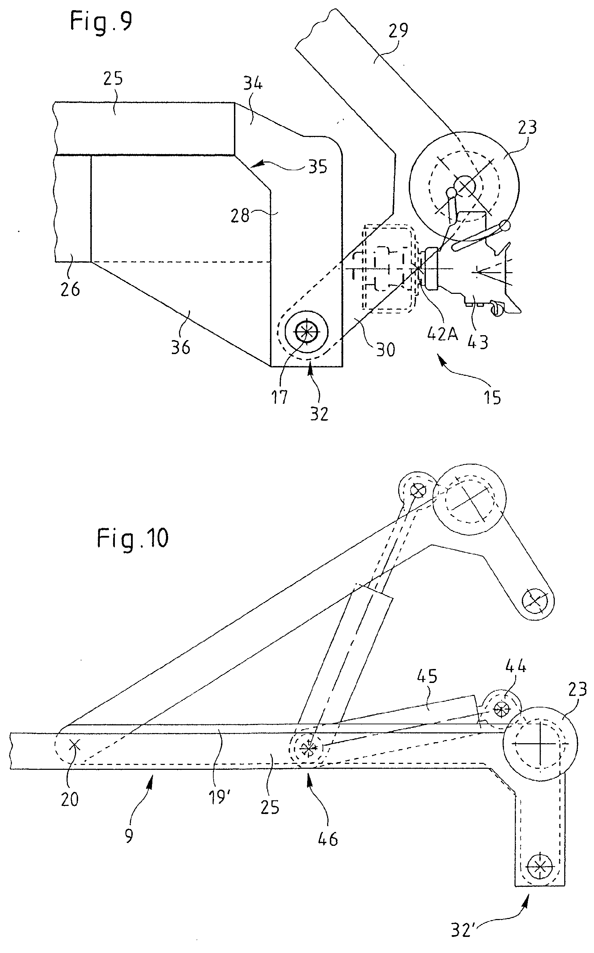

Comme on le voit mieux sur la figure 9, la zone de jonction 34 entre les longerons 25 et les jambages 28 est inclinée vers le bas et vers l'arrière de sorte qu'il existe un espace permettant à la barre 33 de se placer derrière les longerons 25 et au-dessus des jambages 28.

Comme on le voit également plus particulièrement sur la figure 9, les longerons 25 coiffent les longerons 26 en étant exactement contre eux tandis que la partie supérieure des jambages 28 est contre la tranche des longerons 26, l'arête entre la face supérieure et la face arrière (la tranche) des longerons 26 ayant été abattue de sorte qu'il existe un biseau 35 permettant la mise en place de la jonction inclinée 34.

De chaque côté, une équerre 36 (non représentée sur les figures 1 à 4) est disposée entre le longeron 25 et le jambage 28 afin de renforcer leur raccordement, et également pour permettre la fixation du bâti 8, chaque équerre 36 étant fixée (par des moyens non représentés) à la paroi latérale du longeron 26 correspondant.

Dans le mode de réalisation illustré sur les figures 1 à 6, la seconde branche du bâti 8, formée en l'occurrence par les jambages 28, porte une barre anti-encastrement 37 (non représentée sur la figure 5) destinée classiquement à éviter, à la façon d'un pare-choc, qu'un véhicule de tourisme, plus bas que le véhicule 1, puisse venir par l'arrière s'encastrer sous la portion de la charge 5 en porte-à-faux par rapport au véhicule 1.

La liaison entre la barre 37 et les jambages 28 qui la portent s'effectue grâce à deux consoles 38.

On observera qu'en position de transport (figure 1), la distance entre l'arrière de la charge 5 et la barre 37 est particulièrement réduite, ce qui est très favorable à la sécurité contre l'encastrement, et que malgré cette faible distance, la charge 5 peut passer de la position de transport à la position de vidage (figure 4) sans rencontrer la barre 37.

L'écart existant entre l'axe 24 et l'axe 17, et plus généralement entre l'axe 17 et le tronçon longitudinal 14 du bras 9, a pour effet que ce tronçon, et donc la charge 5, lors du passage entre la position de transport et la position de vidage, se décale vers l'arrière (et aussi quelque peu vers le bas).

Un autre élément favorable à une telle disposition de la barre 37 est que l'axe 17 est situé en arrière par rapport au châssis 3.

On observera également que l'écart, vers le bas, entre le tronçon longitudinal 14 et l'axe 17 permet, en position de transport (figure 1), au vérin 10, bien qu'il soit très faiblement incliné par rapport à l'horizontale, de disposer d'un bras de levier conséquent par rapport à l'axe 17, ce bras de levier étant bien plus grand que si le bras 9 était articulé à l'arrière du tronçon 14 au-dessus des longerons 26 du châssis 3.

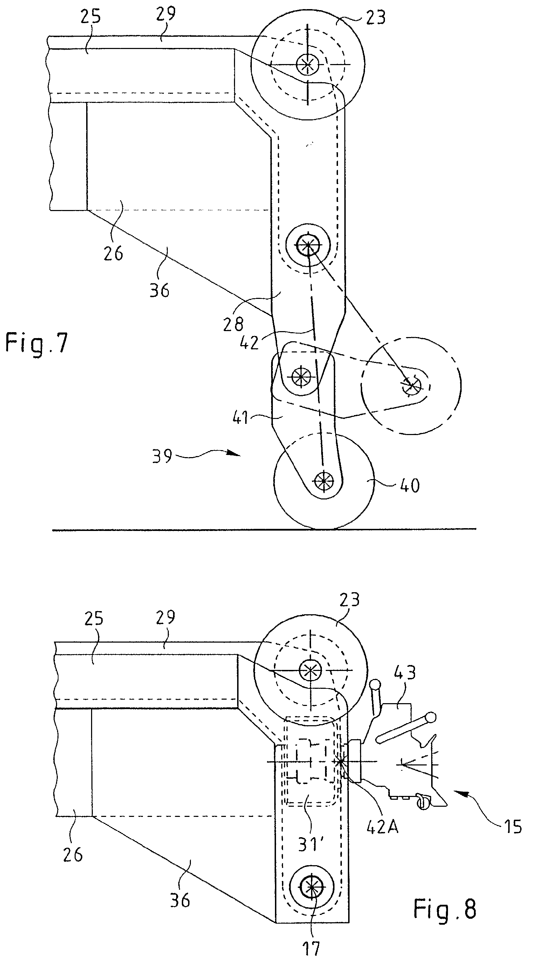

Dans la variante montrée sur la figure 7, les jambages 28 du bâti 8 ne portent pas une barre anti-encastrement 37, mais une béquille d'appui au sol 39 formée par un rouleau de contact du sol 40, par deux biellettes 41 chacune articulée à une extrémité au rouleau 40 et à l'autre extrémité à l'un des jambages 28 et par un vérin 42, symbolisé par une ligne en trait mixte, servant à faire passer la béquille 39 de la position de service dessinée en trait plein à la position rétractée dessinée en trait mixte.

Dans une variante non représentée, il est prévu à la fois une barre anti-encastrement 37 et une béquille d'appui au sol 39.

Dans la variante illustrée sur les figures 8 et 9, la traverse 31 est remplacée par une traverse 31' articulée autour d'un axe transversal de pivotement 42A, la traverse 31' portant un crochet de remorquage 43.

Grâce au montage de la traverse 31' autour de l'axe 42A, il est possible d'amener l'appareil 4 en position de vidage (figure 4) sans avoir à procéder à la déconnexion entre la barre d'attelage de la remorque et le crochet 43, la biellette 19 pouvant pivoter autour de l'axe 17 alors que le crochet 43 reste à l'horizontale, ainsi que montré sur la figure 9.

Dans une variante non représentée, il y a à la fois un crochet monté sur une traverse articulée, une béquille d'appui au sol et/ou une barre anti-encastrement 37.

Dans la variante représentée sur la figure 10, les moyens 32 de montage définitif à rotation autour de l'axe 17 entre le bras 9 et le bâti 8 sont remplacés par des moyens 32' permettant à volonté de verrouiller ou de libérer le montage à rotation. De plus, la biellette 19 est remplacée par une biellette 19' similaire à la biellette 19 mais comportant en outre, à la jonction entre les deux branches, une traverse supplémentaire 44 à laquelle est articulée l'une des extrémités d'un vérin de relevage 45 dont l'autre extrémité est articulée sur une traverse supplémentaire 46 disposée entre les longerons 25 du bâti 8.

En fonctionnement normal, c'est-à-dire comme montré sur les figures 1 à 4, les moyens de montage 32' sont verrouillés tandis que le vérin 45 est passif, c'est-à-dire que sa tige est libre de se déplacer par rapport à son corps, grâce à un distributeur double effet dont la position de repos met en communication les deux chambres du vérin 45.

Lorsque l'on souhaite, à partir de la position de début ou de fin de basculement (figure 2), relever l'arrière d'une charge, on libère les moyens de montage à rotation 32', puis l'on actionne le vérin 45 avec le distributeur susmentionné qu'on place dans la position de déploiement (sortie de tige), ce qui a pour effet de faire pivoter la biellette 19' vers le haut et vers l'arrière autour de l'axe 20, c'est-à-dire vers la position montrée en haut sur la figure 10 (portion de cette figure sans références numériques).

On peut ainsi effectuer de façon particulièrement simple une opération de mise sur pied d'une charge à une hauteur supérieure à celle qu'elle a en position de transport, en particulier une benne pour usage agricole servant à remplir à partir de son fond la remorque d'un tracteur disposé sous cette charge mise sur pied.

Bien entendu, après avoir relevé l'arrière d'une telle charge avec la biellette 19', les pieds arrière de cette charge sont mis en place. L'avant d'une telle charge est quant à lui levé grâce à la potence 18 et au vérin de basculement 10.

Dans les manoeuvres qui viennent d'être décrites, les moyens d'articulation autour de l'axe 20 sont immobilisés par rapport au bâti 10, ainsi d'ailleurs que dans les manoeuvres s'effectuant entre la position de début ou de fin de basculement (figure 2) et la position de prise ou de pose au sol (figure 3).

Dans une variante non représentée, il est prévu à la fois une biellette 19' relevable comme montrée sur la figure 10, une béquille d'appui au sol et/ou une barre d'encastrement.

Dans une variante non illustrée, l'axe transversal d'articulation arrière du bras de manutention est toujours situé à l'écart, vers le bas, du tronçon longitudinal de ce bras, mais pas derrière le châssis, par exemple juste au niveau de son extrémité arrière en prévoyant que les jambages 28, plutôt que de se trouver derrière les longerons 26, soient disposés latéralement par rapport au bout arrière de ces longerons ; ou alors au contraire les jambages 28 sont disposés à une certaine distance en arrière des longerons du châssis, l'axe transversal de pivotement arrière étant donc relativement éloigné derrière le châssis.

Dans d'autres variantes non représentées, la potence télescopique 18 est remplacée par un autre type de potence, télescopique ou non, notamment du type décrit dans la demande de brevet FR 2 185 520 A ou dans la demande de brevet FR 2 169 810 A.

Dans d'autres variantes non illustrées, il existe deux vérins de basculement disposés côte à côte (plutôt qu'un seul) et le véhicule, plutôt que d'être un camion à châssis porteur, est une semi-remorque.

De nombreuses autres variantes sont possibles en fonction des circonstances, et on rappelle à cet égard que l'invention ne se limite pas aux exemples décrits et représentés.

## Revendications

1. Appareil pour permettre à un véhicule (1) de poser ou de prendre au sol une charge (5) telle qu'une benne ainsi que de vider cette charge, ladite charge étant munie, sur une face avant, d'une anse de levage (6), ledit appareil comportant un bras de manutention (9) déformable et basculant muni à une extrémité d'un crochet (16) prévu pour s'engager avec l'anse de levage (6) de ladite charge (5), ledit bras de manutention (9) admettant :
- une position de transport où un tronçon frontal (13) est disposé à l'avant dudit appareil et orienté verticalement ou à peu près avec ledit crochet (16) qui se trouve à son sommet et où un tronçon longitudinal (14) est disposé derrière le tronçon frontal (13) et orienté horizontalement ou à peu près avec l'extrémité avant du tronçon longitudinal (14) qui est raccordée à la base du tronçon frontal (13) ;
- une position de pose ou de prise au sol où ledit crochet (16) est derrière le véhicule à une hauteur lui permettant de s'engager avec ou de se libérer de ladite anse de levage (6) d'une dite charge (5) posée sur le sol ; et
- une position de vidage à laquelle parvient ledit crochet (16) à partir de ladite position de transport en pivotant, sous l'effet d'un vérin de basculement (10), vers le haut et vers l'arrière autour d'un axe transversal de pivotement situé à l'arrière dudit appareil ;
**caractérisé en ce que** ledit axe transversal de pivotement arrière (17) est situé à l'écart dudit tronçon longitudinal (14) du bras de manutention, vers le bas.

2. Appareil selon la revendication 1, **caractérisé en ce que** ledit bras de manutention (9) comporte un tronçon postérieur (15) qui, en position de transport, est disposé derrière ledit tronçon longitudinal (14) et orienté verticalement ou à peu près avec le sommet du tronçon postérieur (15) qui est raccordé à l'arrière du tronçon longitudinal (14), les moyens d'articulation (32) dudit bras autour dudit axe transversal de pivotement arrière (17) étant disposés à la base dudit tronçon postérieur (15).

3. Appareil selon la revendication 2, **caractérisé en ce que** ledit bras de manutention (9) comporte à la jonction entre ledit tronçon longitudinal (14) et ledit tronçon postérieur (15) deux galets (23) prévus pour soutenir respectivement un rail longitudinal (7) situé à droite et un rail longitudinal (7) situé à gauche sur une face inférieure de ladite charge (5).

4. Appareil selon l'une quelconque des revendications 2 ou 3, **caractérisé en ce que** ledit tronçon postérieur (15) du bras de manutention (9) est muni d'un crochet de remorquage (43).

5. Appareil selon la revendication 4, **caractérisé en ce que** ledit crochet de remorquage (43) est monté à basculement autour d'un axe transversal de pivotement (42A).

6. Appareil selon l'une quelconque des revendications 1 à 5, **caractérisé en ce que** ledit bras de manutention (9) comporte une biellette (19) à profil en cornière dont une première banche appartient audit tronçon longitudinal (14) et dont la seconde branche est articulée à sa base autour dudit axe transversal de pivotement arrière (17).

7. Appareil selon la revendication 6, **caractérisé en ce que** ladite biellette (19) comporte deux longerons (29) et un jambage (30) se raccordant transversalement à l'arrière de chaque longeron (29).

8. Appareil selon la revendication 7, **caractérisé en ce qu'**une traverse (31') disposée entre lesdits jambages (30) porte un crochet de remorquage (43) et est articulée, par rapport aux jambages (30), autour d'un axe transversal de pivotement (42A).

9. Appareil selon l'une quelconque des revendications 6 à 8, **caractérisé en ce que** ledit bras de manutention (9) comporte une potence (18) dont une première branche forme ledit tronçon frontal (13) et dont la seconde branche appartient audit tronçon longitudinal (14), ladite seconde branche de la potence (18) étant, à l'opposé dudit tronçon frontal (13), articulée à l'extrémité avant de ladite biellette (19).

10. Appareil selon l'une quelconque des revendications 6 à 9, **caractérisé en ce que** les moyens d'articulation (32') de ladite biellette (19) autour dudit axe transversal de pivotement arrière (17) sont adaptés à être libérés.

11. Appareil selon l'une quelconque des revendications 1 à 10, **caractérisé en ce que** ledit bras de manutention (9) comporte une potence (18) dont une première branche forme ledit tronçon frontal (13) et dont la seconde branche, qui appartient audit tronçon longitudinal (14), est télescopique.

12. Appareil selon l'une quelconque des revendications 1 à 11, **caractérisé en ce qu'**il comporte un bâti (8) ayant un profil en L dont une première branche est prévue pour venir sur le châssis (3) dudit véhicule (1) et dont la seconde branche saille de la première branche vers le bas et comporte des moyens d'articulation (32 ; 32') dudit bras de manutention (9) autour dudit axe transversal de pivotement arrière (17).

13. Appareil selon la revendication 12, **caractérisé en ce qu'**il existe à la jonction entre la première et la seconde branche dudit bâti (8), une portion (34) inclinée vers le bas et vers l'arrière.

14. Appareil selon l'une quelconque des revendications 12 ou 13, **caractérisé en ce que** ledit bâti (8) comporte deux longerons (25) et un jambage (28) se raccordant transversalement à l'arrière de chaque longeron (25).

15. Appareil selon l'une quelconque des revendications 12 à 14, **caractérisé en ce qu'**il comporte une barre anti-encastrement (37) portée par ladite seconde branche du bâti (8).

16. Appareil selon l'une quelconque des revendications 12 à 15, **caractérisé en ce qu'**il comporte une béquille arrière d'appui au sol (39) portée par ladite seconde branche du bâti (8).

17. Véhicule équipé d'un appareil selon l'une quelconque des revendications 1 à 16, **caractérisé en ce que** ledit axe transversal de pivotement arrière (17) se trouve derrière et plus bas que les longerons (26) du châssis (3) dudit véhicule (1).

18. Véhicule équipé d'un appareil selon l'une quelconque des revendications 12 à 16, **caractérisé en ce que** ladite première branche du bâti (8) coiffe les longerons (26) du châssis (3) dudit véhicule (1) et **en ce que** la partie supérieure de la seconde branche est contre l'arrière desdits longerons (26) du châssis.

19. Véhicule selon la revendication 18, **caractérisé en ce qu'**il existe un biseau (35) entre la face supérieure et la face arrière desdits longerons (26), ledit biseau étant bordé par une jonction (34) entre les branches dudit bâti (8).

20. Véhicule selon l'une quelconque des revendications 18 ou 19, **caractérisé en ce qu'**une équerre (36), disposée entre un longeron (25) et un jambage (28) dudit bâti (8), est fixée à la paroi latérale d'un longeron (26) du châssis (3) du véhicule (1).
